## Europäisches Patentamt

## European Patent Office

## Office européen des brevets

(19)

(11) Veröffentlichungsnummer: **0 087 019**
**B1**

(12) # EUROPÄISCHE PATENTSCHRIFT

(45) Veröffentlichungstag der Patentschrift:
**07.01.87**

(51) Int. Cl.⁴: **H 04 N 5/783**

(21) Anmeldenummer: **83100953.5**

(22) Anmeldetag: **02.02.83**

(54) **Videorecorder mit Zeitraffer- und/oder Zeitlupenwiedergabe.**

(30) Priorität: **18.02.82 DE 3205781**

(43) Veröffentlichungstag der Anmeldung:
**31.08.83 Patentblatt 83/35**

(45) Bekanntmachung des Hinweises auf die Patenterteilung:
**07.01.87 Patentblatt 87/2**

(84) Benannte Vertragsstaaten:
**DE FR GB IT**

(56) Entgegenhaltungen:
**EP - A - 0 061 050**
**EP - A - 0 063 737**
**EP - A - 0 066 067**
**EP - A - 0 068 188**
**DE - A - 3 011 635**
**DE - A - 3 110 968**
**DE - A - 3 122 754**
**DE - B - 1 270 596**
**DE - B - 1 277 900**

(73) Patentinhaber: **TELEFUNKEN Fernseh und Rundfunk GmbH, Göttinger Chaussee 76,**
**D-3000 Hannover 91 (DE)**

(72) Erfinder: **Kluth, Hans-Jürgen, Ing. grad.,**
**Gartenstrasse 14, D-3008 Garbsen 8 (DE)**

(74) Vertreter: **Einsel, Robert, Dipl.-Ing., TELEFUNKEN Fernseh und Rundfunk GmbH Göttinger Chaussee 76,**
**D-3000 Hannover 91 (DE)**

## Beschreibung

Bei einem Videorecorder z.B. nach dem VHS-Aufzeichnungssystem werden mit zwei rotierenden Videoköpfen die Signale der zeitlich aufeinanderfolgenden Halbbilder auf sogenannten Schrägspuren aufgezeichnet, die unter einem Winkel von ca. 6° schräg zur Kante des Magnetbandes verlaufen. Dabei ist auf einer Schrägspur von einer Bandkante zur gegenüberliegenden Bandkante jeweils ein Halbbild aufgezeichnet. Die nebeneinanderliegenden Spuren werden dabei ohne Abstand voneinander, d.h. ohne sogenannten Rasen aufgezeichnet.

Zur Verringerung des Übersprechens zwischen benachbarten Spuren ist es dabei bekannt (DE-OS 3 011 635), die beiden Videoköpfe, die zeitlich abwechselnd jeweils ein Halbbild aufzeichnen und dann für das nächste Halbbild unwirksam sind, mit unterschiedlichen Azimutwinkeln zu versehen. Das bedeutet, dass der Spalt der Magnetköpfe relativ zur Querrichtung der Spuren beim einen Kopf um +6° und beim anderen Kopf um −6° versetzt ist. Aufgrund der sogenannten Azimutverluste bei Abweichung zwischen der Richtung des Kopfspaltes und der Magnetisierungsrichtung wird eine hohe Übersprechdämpfung zwischen benachbarten Spuren erreicht. Wenn der erste Videokopf auf der ihm zugeordneten Spur mit dem richtigen Azimutwinkel verläuft, so tastet er von der danebenliegenden Spur mit dem anderen Azimutwinkel praktisch kein Signal ab.

Damit bei der Abtastung die Videoköpfe immer genau der Schrägspur folgen und auch auf der Spur mit dem richtigen Azimutwinkel verlaufen, werden die Spuren durch eine 25 Hz-Impulsfolge markiert, die auf einer entlang einer Bandkante verlaufenden Längsspur aufgezeichnet ist. Durch Vergleich dieser mit einem feststehenden Kopf abgetasteten Impulsfolge mit einer vom Kopfrad abgeleiteten Impulsfolge wird die Phasenlage des die Videoköpfe tragenden Kopfrades so geregelt, dass jeweils ein Kopf auf der ihm zugehörigen Spur verläuft.

Es ist auch bekannt (DE-AS 1 277 900), auf den genannten Schrägspuren zusätzlich zu dem Bildträger einen mit einem Tonsignal frequenzmodulierten Träger aufzuzeichnen. Diese Lösung hat die Vorteile, dass keine gesonderte Längsspur an der Bandkante zur Aufzeichnung des NF-Tonsignals notwendig ist, für die Tonaufzeichnung eine grössere Bandbreite zur Verfügung steht und somit eine höhere Tonqualität und eine grössere Übersprechdämpfung zwischen mehreren aufgezeichneten Tonsignalen erreicht werden.

Bei der beschriebenen Schrägspur-Aufzeichnung ist es auch bekannt, durch Änderung der Längsgeschwindigkeit des Magnetbandes eine Wiedergabe mit von der Normalgeschwindigkeit abweichenden Geschwindigkeit durchzuführen und somit das Bild im Zeitraffer- oder Zeitlupen-Betrieb wiederzugeben. Dies ist deshalb möglich, weil die Signale der aufeinanderfolgenden Halbbilder auf den genannten Schrägspuren unmittelbar nebeneinander liegen und somit der Videokopf beim Übergang von einer Spur auf die andere praktisch denselben Bildpunkt des folgenden oder vorangehenden Halbbildes vorfindet.

Bei der beschriebenen Abtastung mit geänderter Längsgeschwindigkeit des Magnetbandes entsteht jedoch ein Nachteil. Der Videokopf folgt nur dann genau der ihm zugeordneten Aufzeichnungsspur, wenn das Magnetband mit seiner Normalgeschwindigkeit in Längsrichtung bewegt wird. Wenn diese Geschwindigkeit von ihrem Normalwert abweicht, muss der Videokopf zwangsläufig von einer Spur auf benachbarte Spuren gleiten. Das bedeutet, dass im Gegensatz zu der normalen Abtastung der Videokopf auch Spuren mit dem falschen Azimutwinkel abtastet. Dann wird die Amplitude des abgetasteten Signals praktisch gleich null. Die Amplitude des abgetasteten Signales schwankt also in Abhängigkeit davon, wieweit sich der Videokopf auf der Spur mit dem richtigen Azimutwinkel und der Spur mit dem falschen Azimutwinkel befindet. Diese Amplitudenschwankung kann zu Störungen bei der Bildwiedergabe führen. Insbesondere wird durch die Amplitudenschwankungen und die Amplitudeneinbrüche im abgetasteten Träger der Störabstand bei der Bildwiedergabe verringert.

Es ist bekannt (IEEE Transaction on Consumer Electronics Vol. CE-26, February 1980, Seite 121–128), bei einer Wiedergabe, bei der das Magnetband mit einer von der Normalgeschwindigkeit abweichenden Geschwindigkeit in seiner Längsrichtung transportiert wird, die von dem Videokopf zurückgelegte Spur gegenüber der aufgezeichneten Spur um einen solchen geometrischen Betrag in Längsrichtung des Bandes zu versetzen, dass der Videokopf einen möglichst grossen Flächenanteil der aufgezeichneten Spur mit dem dem Videokopf zugeordneten Azimutwinkel abtastet. Durch die Verschiebung wird im wesentlichen das Maximum der Amplitude des abgetasteten Signals jeweils in die Mitte einer Schrägspur und damit in die Mitte des Bildes gelegt, wo Störungen am meisten auffallen würden.

Der Erfindung liegt die Aufgabe zugrunde, bei einem Videorecorder der zuletzt beschriebenen Art zusätzlich eine Aufzeichnung des Tonsignals zu schaffen, bei der auch für den Ton eine nahezu unverfälschte Zeitraffer- und/oder Zeitlupenwiedergabe möglich ist, ohne dass die Frequenzen des Tonsignals verfälscht werden.

Diese Aufgabe wird durch die im Anspruch 1 beschriebene Erfindung gelöst. Vorteilhafte Weiterbildungen der Erfindung sind in den Unteransprüchen beschrieben.

In den älteren europäischen Patentanmeldungen 63 737, 61 050, 66 067 und 68 188 sind Videorecorder beschrieben, bei denen ein oder mehrere Tonträger zusammen mit einem mit dem Videosignal frequenzmodulierten Bildträger entlang jeweils der gesamten Länge der Schrägspuren aufgezeichnet werden und die Frequenzen der Tonträger in einem Bereich von 1,7–1,9 MHz liegen. Die Aufgabe, eine unverfälschte Tonwiedergabe bei Zeitraffer- oder Zeitlupenwiedergabe zu ermöglichen, wird dort jedoch nicht behandelt. Ausserdem wird dort keine Anregung vermittelt, bei der Wahl der Frequenzen der Tonträger die frequenzabhängigen Azimutverluste in dem Sinne zu berücksichtigen, dass bei der Wiedergabe für die Tonträger zwischen benachbarten Spuren eine die unverfälschte Tonwiedergabe bewirkende Übersprechdämpfung auftritt.

Die erreichte Zeitraffer- und/oder Zeitlupenwiedergabe für den Ton ohne Änderung der Frequenzlage des Tonsignals lässt sich folgendermassen erklären. Da die Abtastung einer Schrägspur nur 20 ms dauert, ist auf einer Schrägspur vom Tonsignal in der Praxis nicht eine ganze Silbe wie z.B. «nach», sondern nur ein Vokal wie z.B. «a» oder nur ein Bruchteil eines Vokals aufgezeichnet. Wenn also eine solche Schrägspur mehrfach abgetastet wird, so ergibt sich bei der Tonwiedergabe nicht eine sinnlose oder störende Wiederholung einer ganzen Silbe, sondern lediglich eine Wiederholung eines Vokals oder eines Konsonanten. Das bedeutet, dass z.B. der Vokal «a» in der Silbe «nach» mehrfach abgetastet und somit die gesamte Tonwiedergabe gedehnt wird. Es ergibt sich dann bei der Wiedergabe eine verlangsamte verständliche Sprachwiedergabe. Da die Relativgeschwindigkeit zwischen dem Videokopf und der Schrägspur trotz der Änderung der Geschwindigkeit des Magnetbandes in seiner Längsrichtung praktisch unverändert bleibt, wird die Frequenz des abgetasteten Trägers praktisch nicht verändert, so dass die Frequenzdemodulation des aufgezeichneten Trägers unverändert funktioniert. Daher bleibt auch die Stimmlage des Tones erhalten und wird nicht wie bei einem Tonbandgerät bei schnellerer oder langsamerer Abtastung verfälscht. Eine derartige Wiedergabe des Tones mit erhöhter oder verringerter Geschwindigkeit bei richtiger Stimmlage erfordert sonst einen grossen schaltungstechnischen Aufwand in Form von Eimerkettenschaltungen und dergleichen. Diese verlangsamte oder beschleunigte Tonwiedergabe ist in der Praxis vorteilhaft, z.B. bei zu schneller Sprechweise beim aufgezeichneten Tonsignal, für Sprachanalyse oder Lehrzwecke. Dieses Prinzip ist näher beschrieben in der DE-PS 721 198.

Die erfindungsgemässe Frequenzlage der Tonträger hat darüberhinaus den Vorteil, dass der oder die Tonträger in einem Bereich liegen, wo der Frequenzgang des Videokopfes ein Maximum aufweist, während der Frequenzgang im Bereich von etwa 0,5–1,0 MHz bereits stark abgefallen ist. Das ist deshalb vorteilhaft, weil der Tonträger im allgemeinen nur mit einer Amplitude von 10% der Amplitude des Bildträgers aufgezeichnet wird. Durch die Frequenzlage der Tonträger wird also zusätzlich ein ausreichender Störabstand für den oder die Tonträger erzielt.

Für die Tonwiedergabe ergibt sich noch folgender Vorteil. Die Abtastung der Schrägspur erfolgt abwechselnd mit den beiden Videoköpfen. Beim Kopfwechsel entsteht bei der Tonwiedergabe eine Störung, weil die Signalabtastung von einem anderen Kopf übernommen wird und bei der Abtastung eines FM-Trägers unvermeidlich Phasensprünge entstehen. Die den Ausgangspunkt der Erfindung bildende Abtastung erfolgt so, dass die Minima in der Amplitude des abgetasteten Tonträgers beim Übergang von einem Halbbild zum anderen Halbbild, also beim Kopfwechsel liegen. Im kritischen Zeitpunkt beim Kopfwechsel hat dann der abgetastete FM-Tonträger seine minimale Amplitude, so dass sich auch Phasensprünge in diesem Träger auf das demodulierte Tonsignal weniger auswirken. Die Längsgeschwindigkeit des Magnetbandes kann z.B. von einem Minimalwert von 5 mm/s über den Normalwert von 23,39 mm/s bis zu einem Maximalwert von 46,8 mm/s geändert werden. Die Relativgeschwindigkeit der Videoköpfe zum Band bleibt dabei in vorteilhafter Weise mit etwa 4,8 m/s konstant, so dass auch die Frequenzdemodulation für den Bildträger und den Tonträger praktisch unbeeinflusst bleibt.

Die Aufzeichnung und die Abtastung der Schrägspuren erfolgt vorzugsweise mit zwei Videoköpfen wie bei heute handelsüblichen Videorecordern. Grundsätzlich ist auch eine Abtastung mit mehr als zwei Videoköpfen möglich.

Ein Ausführungsbeispiel der Erfindung wird anhand der Zeichnung erläutert. Darin zeigen

Figur 1 die Anordnung der Schrägspuren bei Aufnahme, Wiedergabe und Wiedergabe mit erhöhter Längsgeschwindigkeit,

Figur 2 Diagramme zur Erläuterung der Abtastung der Schrägspuren in Figur 1,

Figur 3 ein Beispiel für die Verschiebung der Abtastspur,

Figur 4 eine Schaltung für die Amplitudenregelung bei der Wiedergabe,

Figur 5 ein Diagramm zur Erläuterung der Wirkungsweise der Figur 4 und

Figur 6 ein Blockschaltbild für die Wiedergabeschaltung zur Durchführung der Erfindung.

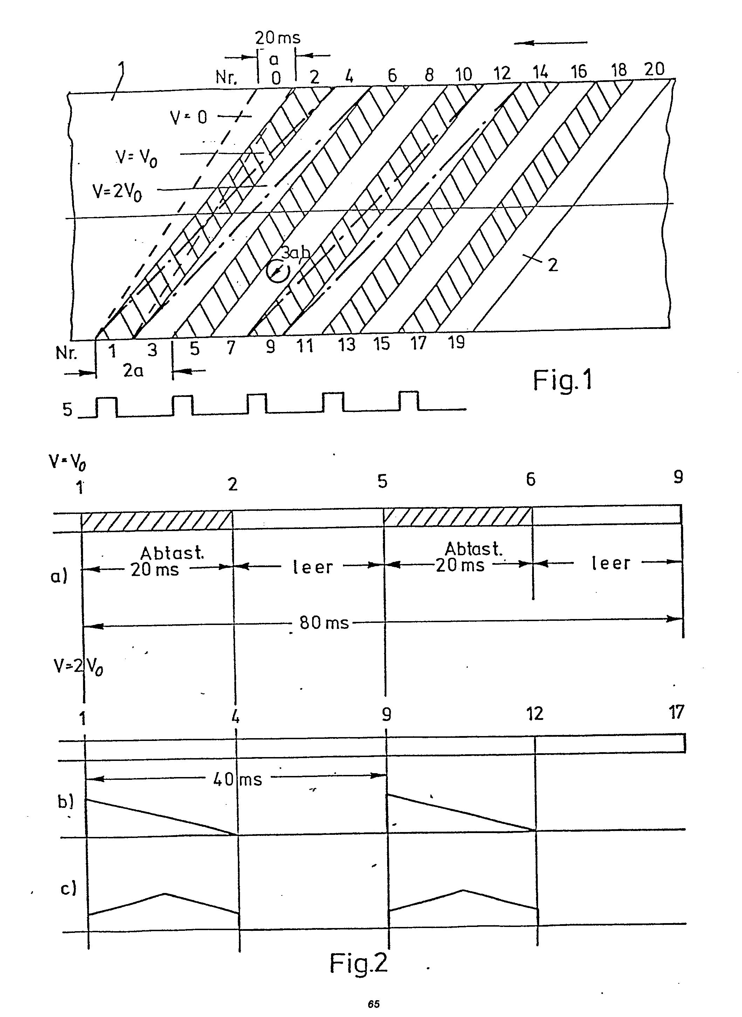

In Figur 1 sind auf dem Magnetband 1 Schrägspuren 2 aufgezeichnet, die jeweils von einer Bandkante zur anderen Bandkante verlaufen. Weitere in der Praxis vorhandene Längsspuren für die zusätzliche Aufzeichnung eines Tonsignals oder eines Synchronisiersignales sind nicht dargestellt. In der Praxis verlaufen die Schrägspuren unter einem geringeren Winkel von etwa 6° schräg zur Bandkante. Anfang und Ende der gezeichneten Schrägspuren sind mit den Ziffern 0–20 versehen. Die Schrägspuren werden abwechselnd von zwei Videoköpfen 3a und 3b geschrieben. Lage und Ort der Abtastung der Schrägspuren 2 wird zusammen mit der Figur 2 erläutert. Es sei zunächst angenommen, dass die Längsgeschwindigkeit V des Magnetbandes 1 in Richtung 4 gleich null ist. Der Videokopf 3 schreibt bei seiner Rotation innerhalb einer Kopftrommel die Spur 1–0. Die Lage dieser Spur ergibt sich durch die geometrischen Verhältnisse bei der Umschlingung der Kopftrommel durch das Magnetband 1. Der Videokopf 3 würde bei Stillstand des Bandes, also V = 0, immer wieder diese Spur 1–0 abtasten. Die Abtastung einer Spur dauert 20 ms, nämlich die Dauer eines Halbbildes des Fernsehsignals. Jetzt sei angenommen, dass sich das Magnetband 1 mit der Normalgeschwindigkeit Vo in Richtung 4 bewegt. Während der Abtastung der bei 1 beginnenden Spur hat dann das Band 1 in Richtung 4 eine Wegstrecke a zurückgelegt, die sich aus der Zeit von 20 ms und Vo = 23,39 mm/s ergibt. Der Videokopf bestreicht somit bei der Normalgeschwindigkeit Vo nicht mehr die Spur 1–0, sondern die Spur 1–2. Diese Abtastung ist in Figur 1 und 2 schraffiert zwischen den Punkten 1 und 2 dargestellt. Während der nächsten 20 ms ist der Videokopf 3a nicht an einer Abtastung beteiligt, sondern läuft leer wieder zur unteren Bandkante zurück. Dieser Rücklauf dauert ebenfalls 20 ms, so dass der Videokopf 3a nach 40 ms wieder an der unteren Bandkante, also an der Stelle 5 angelangt ist. Das Magnetband 1 hat dann die der Zeit von 40 ms entsprechende Strecke 2a zurückgelegt. Dann beginnt wieder die Abtastung der Spur 5–6 in einer Zeit von 20 ms. Auf gleiche Weise tastet der Videokopf 3b die dazwischenliegenden, nicht schraffierten Spuren 3–4, 7–8, 11–12 usw. ab. Auf einer Längsspur des Magnetbandes 1 ist noch die Impulsfolge 5 von 25 Hz aufgezeichnet, die jeweils die Spuren 1–2, 5–6, 9–10 usw. markiert. Diese Impulsfolge sorgt dafür, dass der Kopf 3a immer diese Spuren und der Videokopf 3b immer die dazwischenliegenden Videospuren findet.

Es sei nun angenommen, dass die Geschwindigkeit V auf den doppelten Wert 2Vo erhöht wird. Bei der Geschwindigkeit Vo hat der Videokopf 3a in der Zeit von 80 ms auf den Schrägspuren die Strecke 1–9 zurückgelegt. Da jetzt die Geschwindigkeit V = Vo ist, muss der Videokopf 3a diese Strecke 1–9 in der halben Zeit, also in 40 ms zurücklegen. Das bedeutet, dass gegenüber $V_0$ die Verschiebung der Spur von einer Bandkante zur anderen nicht mehr = a ≙ 20 ms, sondern nunmehr = Za ≙ 40 ms beträgt. Der Videokopf 3a schreibt also die in Figur 1 strichpunktiert gezeichnete Spur 1–4 und nach erfolgtem Leerlauf die Spur 9–12. Der Videokopf 3a beginnt also, gesteuert durch die Impulsfolge 5, die Abtastung auf der Spur 1–2 mit dem richtigen Azimutwinkel und somit voller Amplitude des abgetasteten Signals. Wie durch die strichpunktierte Spur 1–4 dargestellt, verlässt jedoch der Videokopf im Verlauf der Spur 1–4 kontinuierlich die richtige Spur 1–2 und läuft dann auf die Spur 3–4 mit dem falschen Azimutwinkel, bei dem die Amplitude des abgetasteten Signals praktisch gleich null ist. Dadurch ergibt sich für den abgetasteten Träger ein Amplitudenverlauf gemäss Figur 2b.

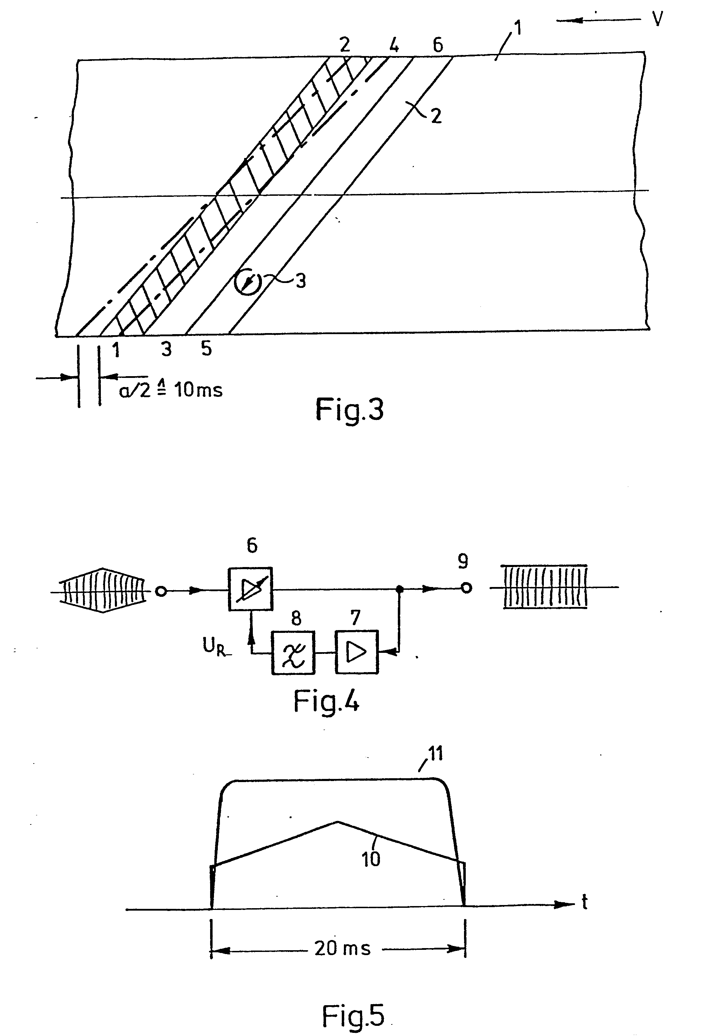

In Figur 3 ist nun die Lage der strichpunktierten Abtastspur um den Betrag a/2 ≙ 10 ms nach links verschoben. Es ist ersichtlich, dass die strichpunktierte Abtastspur der Spur 1–2 mit dem richtigen Azimutwinkel besser zugeordnet ist. Einerseits ist die Optimallage zur richtigen Spur 1–2 und damit die Maximalamplitude des abgetasteten Signals in die Mitte der Schrägspur verschoben. Andererseits ist die Signalamplitude sowohl am Anfang als auch am Ende der Spur nicht mehr null, sondern hat noch den halben Wert, weil auch an diesen Stellen noch die richtige Spur 1–2 erfasst wird. Durch diese nunmehr verbesserte Abtastung ergibt sich der Amplitudenverlauf gemäss Figur 2c. Die Verschiebung des Maximums in die Mitte eines Halbbildes hat bei der Bildwiedergabe den Vorteil, dass die optimale Lage mit dem grössten Störabstand nunmehr in der Bildmitte und nicht am oberen Bildrand liegt. Da die Hauptereignisse und das Zentrum der Bildbetrachtung erfahrungsgemäss in der Bildmitte liegen und weniger am Bildrand, hat dieses für die Bildwiedergabe einen Vorteil. Für die Tonwiedergabe entsteht der Vorteil, dass an den Enden der Schrägspuren, also beim Kopfwechsel, wo Phasensprünge im abgetasteten Tonträger zu Störungen führen können, die Amplitude einen geringeren Wert hat.

Die in Figur 3 dargestellte Verschiebung der strichpunktierten Abtastspur lässt sich bei der Wiedergabe auf einfache Weise erreichen. Bekanntlich wird die Drehung des Kopfrades durch Vergleich der Impulsfolge 5 von der Längsspur des Magnetbandes 1 mit einer vom Kopfrad abgeleiteten Impulsfolge so gesteuert, dass der Magnetkopf genau den Aufzeichnungsspuren folgt. Durch Eingriff in diesen Regelkreis lässt sich somit eine beliebige Verschiebung der Abtastspuren, z.B. um den Wert a/2 in Figur 3 erreichen. Zu diesem Zweck braucht nur eine der dem Phasenvergleich zugeführten Impulsfolgen um den gewünschten Betrag verschoben zu werden. Dann wird der Kopfrad-Regelung eine andere Lage der auf dem Band 1 aufgezeichneten Impulsfolge 5 vorgetäuscht und somit die Lage der Abtastspuren geometrisch in Bandlängsrichtung verschoben.

Figur 4 zeigt eine Schaltung, mit der die Amplitudenänderung gemäss Figur 2c bei einem Bildträger oder Tonträger ausgeregelt werden kann. Der Träger wird über den Verstärker 6 geführt. Das Ausgangssignal des Verstärkers 6 wird in dem Gleichrichter 7 gleichgerichtet. Am Ausgang des Siebgliedes 8 wird eine Regelspannung $U_R$ gewonnen, die von der Amplitude des Trägers abhängig ist und die Verstärkung des Verstärkers 6 so steuert, dass an der Ausgangsklemme 9 ein Träger mit konstanter Amplitude steht. Diese Amplitudenstabilisierung kann auch durch andere Regelschaltungen, Steuerschaltungen oder Begrenzer erreicht werden.

In Figur 5 wird der Amplitudenverlauf 10 gemäss Figur 2c durch die Schaltung gemäss Figur 4 in den Amplitudenverlauf 11 umgewandelt. Es ist ersichtlich, dass nunmehr der Träger über die ganze Halbbilddauer von 20 ms eine weitestgehend konstante Amplitude hat.

Der Betrag der Verschiebung der Abtastspur, a/2 in Figur 3, kann von dem Mass der Zeitdehnung oder Zeitraffung abhängig sein. Bei doppelter Längsgeschwindigkeit 2Vo ist dieser Betrag vorzugsweise gleich 10 ms. Bei gegenüber Vo verringerter Geschwindigkeit V ist es zweckmässig, die Geschwindigkeit in folgenden Stufen zu ändern:

0,2 · Vo = 4,678 mm/s
0,4 · Vo = 9,356 mm/s
0,6 · Vo = 14,034 mm/s
0,8 · Vo = 18,712 mm/s.

Für diese Werte der Längsgeschwindigkeit V ist eine Verschiebung der Abtastspur um einen Betrag zweckmässig, der bei der Normalgeschwindigkeit Vo einer Zeit von 5 ms entspricht. Es lässt sich zeigen, dass dann eine optimale Zuordnung der Abtastspuren zu den Spuren mit dem richtigen Azimutwinkel gemäss Figur 3 erreicht wird. Ausserdem wird erreicht, dass diese optimale Zuordnung ständig, d.h. von Halbbild zu Halbbild die gleiche ist und keine Schwankungen über einen längeren Zeitraum auftreten. Die Änderung der Längsgeschwindigkeit V zwischen den genannten Werten lässt sich dadurch erreichen, dass die vom Tachogenerator für den Längsantrieb V abgeleitete Impulsfolge von 225 Hz auf 450 Hz verdoppelt und dann geteilt wird. Dann erhält man für die Regelung der Längsgeschwindigkeit V die bei den gewünschten abweichenden Geschwindigkeiten erforderlichen Referenzimpulse. Von der Längsspur des Magnetbandes 1 kommen bei veränderter Geschwindigkeit V ebenfalls die Impulsfolge 5 mit unterschiedlichen Frequenzen, die dann in bekannter Weise zur Korrektur der Abtastphase, d.h. der Zuordnung des Kopfweges zu den Spuren dienen.

Für die insgesamt beschriebenen verschiedenen Geschwindigkeiten V ergibt sich somit folgende Tabelle:

| Wert von V | Frequenz des Tachogenerators | Teilungsfaktor für diese Frequenz | Vom Tachogenerator abgegebene Frequenz |
|---|---|---|---|
| 2·Vo | 450 Hz | 9 | 50 Hz |
| 0,2·Vo | 450 Hz | 90 | 5 Hz |
| 0,4·Vo | 450 Hz | 45 | 10 Hz |
| 0,6·Vo | 450 Hz | 30 | 15 Hz |
| 0,8·Vo | 450 Hz | 22 | 20 Hz |
| 1,0·Vo | 450 Hz | 18 | 25 Hz |

Die bei den einzelnen Geschwindigkeiten V von der Längsspur des Magnetbandes 1 abgetastete Impulsfolge 5 hat dann ebenfalls die in der rechten Spalte genannten Frequenzen. Diese Impulsfolgen können dann in bekannter Weise in der Phase verglichen und zur Regelung der Drehphase des die Videoköpfe tragenden Kopfrades in dem Sinne ausgenutzt werden, dass die Köpfe jeweils den gewünschten Spuren gemäss Figur 1 oder Figur 3 folgen.

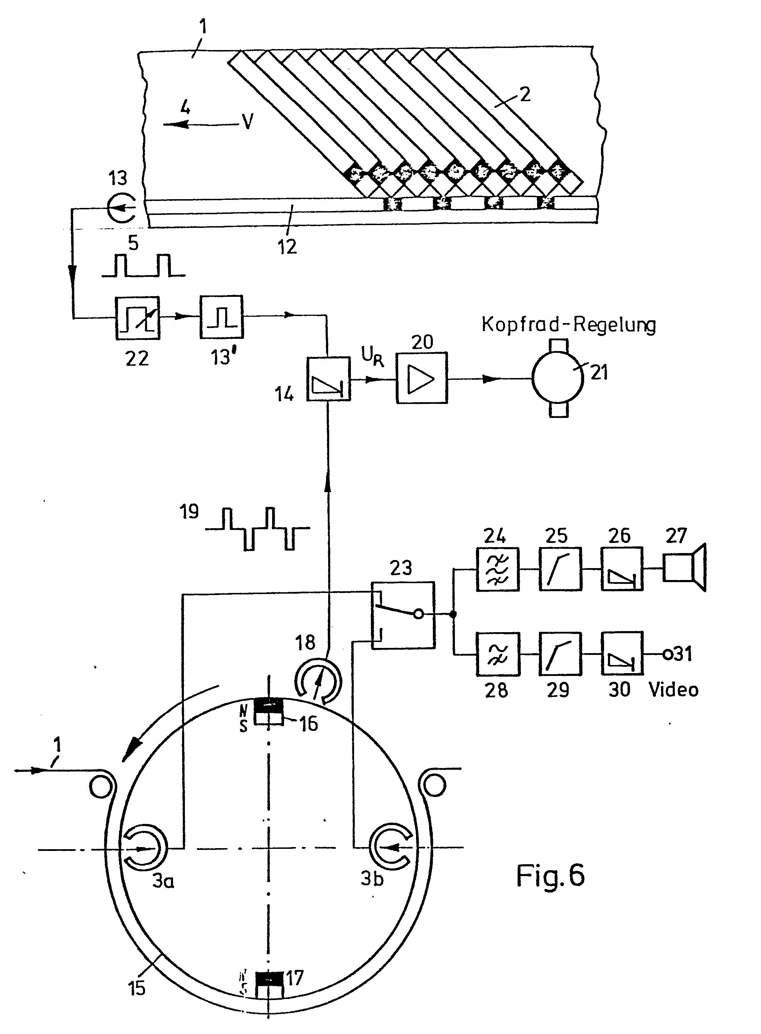

Figur 6 zeigt eine Schaltung, mit der die beschriebene Verschiebung der Spuren bei der Wiedergabe erreicht werden kann. Dargestellt sind das Magnetband 1, die Schrägspuren 2, die Richtung 4 der Längsgeschwindigkeit V, die Spur 12 für die mit dem Synchronkopf 13 abgetastete Impulsfolge 5, ein Impulsformer 13' für die Impulsfolge 5, die Phasenvergleichsstufe 14 für die Kopfradregelung, die Kopftrommel 15 mit den Videoköpfen 3a und 3b sowie zwei Permanentmagneten 16, 17, der Abtastkopf 18 zur Abtastung der durch die Magnete 16, 17 erzeugten Kopfrad-Impulsfolge 19 mit einer Frequenz von 25 Hz, ein Verstärker 20 für die in der Phasenvergleichsstufe 14 erzeugte Regelspannung $U_R$ und ein Motor 21 für den Antrieb des Kopfrades 15. Die von der Synchronspur 12 mit dem Kopf 13 abgetastete Impulsfolge 5 mit 25 Hz und die vom Kopf 18 durch die Magnete 16, 17 erzeugte Impulsfolge 19 mit 25 Hz werden in der Phasenvergleichsstufe 14 miteinander verglichen. Die dadurch gewonnene Regelspannung $U_R$ steuert über den Verstärker 20 die Phase der Drehung des Motors 21 und damit des Kopfrades 15 so, dass bei der Wiedergabe die Videoköpfe 3a und 3b genau den Spuren 2 folgen und zwar so, dass sie jeweils die Spur mit dem richtigen Azimutwinkel abtasten. Im Weg der Impulsfolge 5 ist die Verzögerungsstufe 22 vorgesehen. Diese erzeugt einen Impuls, bei dem die zeitliche Lage der Rückflanke einstellbar ist. Die Rückflanke des Ausgangsimpulses der Stufe 22 erzeugt die Impulse am Ausgang des Impulsformers 13'. Durch diese Massnahme wird also der Phasenvergleichsstufe 14 eine andere Lage des Magnetbandes 1 in Richtung 4 vorgetäuscht, so dass das Kopfrad 15 bei der Abtastung entsprechend in Richtung 4 verschoben wird. Auf diese Weise kann also die Verschiebung gemäss Figur 3 auf einen beliebigen Wert eingestellt werden. Die Stufe 22 kann zwar einen Impuls der Impulsfolge 5 nicht zeitlich vorverlegen z.B. um die genannten 5 oder 10 ms. Da die Impulsfolge 5 aber eine kontinuierliche Impulsfolge ist, kann eine gewünschte zeitliche Vorverlegung eines Impulses durch entsprechende Verzögerung des vorangehenden Impulses ersetzt werden. Bei einer Periodendauer von 40 ms in der Impulsfolge 5 ist eine Verzögerung um 35 ms mit einer zeitlichen Vorverschiebung um 5 ms gleichwertig. Durch Einstellung der Verzögerung in der Stufe 22 können also die optimalen Verhältnisse gemäss Figur 1 und 3 eingestellt werden. Diese Impulsverzögerung kann ebenso im Weg der Impulsfolge 19 erfolgen.

Die Signale der beiden Videoköpfe 3a und 3b werden mit dem Umschalter 23 von Halbbild zu Halbbild abwechselnd ausgewertet. Der aufgezeichnete Tonträger wird mit dem Bandfilter 24 ausgewertet, in dem Begrenzer 25 verstärkt, in dem FM-Demodulator 26 demoduliert. Dessen Ausgangsspannung wird dem Lautsprecher 27 über einen weiteren Verstärker zugeführt. Mit dem Filter 28 wird der aufgezeichnete Bildträger mit seinen Seitenbändern ausgewertet und über den Begrenzer 29 dem FM-Demodulator 30 zugeführt. Dieser liefert an der Klemme 31 das Videosignal für die Bildwiedergabe.

### Patentansprüche

1. Videorecorder mit Zeitraffer- und/oder Zeitlupenwiedergabe, bei dem zwei oder mehr rotierende Videoköpfe (16, 17) mit unterschiedlichen Azimutwinkeln abwechselnd jeweils ein Halbbild entlang einer Schrägspur (2) eines in seiner Längsrichtung (4) mit einer Normalgeschwindigkeit transportierten Magnetbandes (1) aufzeichnen und bei einer Wiedergabe, bei der das Magnetband (1) mit einer von der Normalgeschwindigkeit (Vo) abweichenden Geschwindigkeit (V) in seiner Längsrichtung (4) transportiert wird, die von jedem Videokopf (16, 17) zurückgelegte Spur (2) gegenüber der aufgezeichneten Spur (2) um einen solchen geometrischen Betrag (a/2) in Längsrichtung (4) des Bandes (1) versetzt ist, bei dem der Videokopf (16, 17) einen möglichst grossen Flächenanteil der aufgezeichneten Spur (2) mit dem dem Videokopf (16, 17) zugeordneten Azimutwinkel abtastet, dadurch gekennzeichnet, dass mit den Videoköpfen (16, 17) ein mit dem Videosignal frequenzmodulierter Bildträger und ein oder mehrere mit einem NF-Tonsignal frequenzmodulierte Tonträger gemeinsam und jeweils im wesentlichen entlang der gesamten Länge der Schrägspuren (2) in diesen aufgezeichnet werden, und dass zur Erzielung einer nahezu unverfälschten Tonwiedergabe bei Zeitraffer- oder Zeitlupenwiedergabe die Frequenzen der Tonträger in einem Bereich von 1,9 bis 2,5 MHz liegen, bei dem die durch die Azimutwinkel bewirkten Azimutverluste bei der Wiedergabe zu einer Übersprechdämpfung zwischen benachbarten Spuren (2) von 40 bis 60 dB führen.

2. Recorder nach Anspruch 1, dadurch gekennzeichnet, dass eine Schaltung (Fig. 4) zur Konstanthaltung der Amplitude eines abgetasteten frequenzmodulierten Trägers vorgesehen ist.

3. Recorder nach Anspruch 1, dadurch gekennzeichnet, dass die Frequenz des Tonträgers im Bereich des Maximums des Frequenzganges des Videokopfes (3) liegt.

4. Recorder nach Anspruch 1, dadurch gekennzeichnet, dass die Amplitude des Tonträgers etwa 10% der Amplitude des Bildträgers beträgt.

### Claims

1. Video recorder with slow motion or fast motion reproduction, in which two or more rotating video heads (16, 17) having different azimuth angles alternately record a respective half picture along an inclined track (2) of a magnetic tape (1) moved at a normal speed in its longitudinal direction (4) and having a mode of reproduction in which the magnetic tape (1) is moved in its longitudinal direction at a speed (V) differing from the normal speed (Vo) and the track (2) retraced by each video head (16, 17) is displaced with respect to the recorded track (2) by such a geometric amount (a/2) in the longitudinal direction (4) of the tape (1) whereby the video head (16, 17) samples a maximally large surface portion of the recorded track (2) having the azimuth angle corresponding to the video head (16, 17) characterized in that a picture carrier frequency modulated with the video signal and one or more sound carriers frequency modulated with a low frequency sound signal are recorded by the video heads (16, 17) in combination and respectively substantially along the total length of the inclined tracks (2) and that to achieve an almost error free sound reproduction in the event of slow motion of fast motion reproduction, the frequencies of the sound carriers lie in the range from 1.9 to 2.5 MHz, whereby the azimuth losses caused upon reproduction by the azimuth angle lead to cross talk attenuation between neighbouring tracks (2) of from 40 to 60 dB.

2. Recorder according to Claim 1, characterized in that a circuit (Figure 4) is provided to maintain constant the amplitude of a reproduced frequency modulated carrier.

3. Recorder according to Claim 1, characterized in that the frequency of the sound carrier lies in the vicinity of the maximum of the frequency range of the video head (3).

4. Recorder according to Claim 1, characterized in that the amplitude of the sound carrier amounts to about 10% of the amplitude of the picture carrier.

### Revendications

1. Magnétoscope avec reproduction en accéléré et/ou au ralenti, dans lequel deux ou plusieurs têtes vidéo tournantes (16, 17) à azimuts différents enregistrent chacune alternativement une demi-image le long d'une piste inclinée (2) d'une bande magnétique (1) transportée dans sa direction longitudinale (4) avec une vitesse normale, alors que dans le cas d'une reproduction pour laquelle la bande magnétique (1) est transportée dans sa direction longitudinale (4) avec une vitesse (V) différente de la vitesse normale (Vo) la piste (2) parcourue par chaque tête vidéo (16, 17) se trouve décalée, par rapport à la piste enregistrée (2), dans la direction longitudinale (4) de la bande (1) d'une quantité géométrique (a/2) telle que la tête vidéo (16, 17) explore une partie aussi grande que possible de la surface de la piste enregistrée (2) présentant l'azimut associé à la tête vidéo (16, 17), caractérisé en ce qu'au moyen des têtes vidéo (16, 17) une porteuse image, modulée en fréquence par le signal vidéo, et une ou plusieurs porteuses son, modulées en fréquence par un signal audio BF, sont enregistrées conjointement sur les pistes inclinées (2) et ce chaque fois sensiblement sur toute la longueur de celles-ci, et en ce que pour obtenir une reproduction à peu près fidèle du son en cas de lecture en accéléré ou au ralenti les fréquences des porteuses son se situent dans le domaine de 1,9 à 2,5 MHz où les pertes par désalignement dues aux azimuts conduisent lors de la reproduction à une atténuation de diaphonie entre des pistes voisines (2) de 40 à 60 dB.

2. Magnétoscope selon la revendication 1, caractérisé en ce qu'il est prévu un circuit pour maintenir constante l'amplitude d'une porteuse modulée en fréquence et explorée.

3. Magnétoscope selon la revendication 1, caractérisé en ce que la fréquence de la porteuse son se situe dans le domaine du maximum de la réponse fréquentielle de la tête vidéo (3).

4. Magnétoscope selon la revendication 1, caractérisé en ce que l'amplitude de la porteuse son est approximativement égale à 10% de l'amplitude de la porteuse image.

20 ms

a
0

Nr.   2   4   6   8   10   12   14   16   18   20

V = 0

V = V₀

V = 2V₀

3ab

2

Nr.   1   3   5   7   9   11   13   15   17   19

2a

5

## Fig.1

V = V₀
1   2   5   6   9

a)

Abtast.
20 ms   ←— leer —→   Abtast.
20 ms   ←— leer —→

←————————— 80 ms —————————→

V = 2 V₀
1   4   9   12   17

b)

←—— 40 ms ——→

c)

## Fig.2

Fig.3

$a/2 \triangleq 10\,ms$

V

Fig.4

$U_R$

Fig.5

20 ms

t

Fig.6